# EUROPEAN PATENT SPECIFICATION

(11) **EP 2 501 111 B1**
(45) Date of publication and mention of the grant of the patent: **01.05.2013**
(21) Application number: 11158133.6
(22) Date of filing: 14.03.2011
(51) Int. Cl.: H04L 29/12

(54) **Method and system for monitoring use of a mobile hotspot function in a wireless device**
Verfahren und System zur Überwachung der Verwendung einer mobilen Hotspot-Funktion in einer drahtlosen Vorrichtung
Procédé et système pour surveiller l'utilisation d'une fonction de point d'accès mobile dans un dispositif sans fil

(43) Date of publication of application: 19.09.2012
(73) Proprietor: Research In Motion Limited, Waterloo, ON N2L 3W8 (CA)
(72) Inventor: Deu-Ngoc, Joseph Tu-Long, Waterloo Ontario N2L 3W8 (CA); Thompson, Jeremy, Waterloo Ontario N2L 3W8 (CA); Gammon, Scott Peter, Waterloo Ontario N2L 3W8 (CA)
(74) Representative: Moore, Barry

(56) References cited:
- GB-A- 2 407 729
- US-A1- 2010 014 459
- SRISURESH M HOLDREGE LUCENT TECHNOLOGIES P: "IP Network Address Translator (NAT) Terminology and Considerations; rfc2663.txt", IETF STANDARD, INTERNET ENGINEERING TASK FORCE, IETF, CH, 1 August 1999 (1999-08-01), XP015008446, ISSN: 0000-0003
- EGEVANG CRAY COMMUNICATIONS P FRANCIS NTT K: "The IP Network Address Translator (NAT); rfc1631.txt", IETF STANDARD, INTERNET ENGINEERING TASK FORCE, IETF, CH, 1 May 1994 (1994-05-01), XP015007418, ISSN: 0000-0003

## Description

### FIELD OF THE APPLICATION

This application relates to the field of wireless devices, and more specifically, to a method and system for monitoring use of a mobile hotspot function in a wireless device.

### BACKGROUND

Current wireless mobile communication devices include microprocessors, memory, soundcards, speakers, headphones, and run one or more software applications in addition to providing for voice communications. Examples of software applications used in these wireless devices include browsers, address books, email, instant messaging ("IM"), and mobile hotspot functions. Additionally, wireless devices have access to a plurality of services via the Internet. A wireless device may, for example, be used to browse web sites on the Internet, to transmit and receive graphics, and to execute streaming audio and/or video applications. Such wireless devices may operate on a cellular network, on a wireless local area network ("WLAN"), or on both of these types of networks.

One problem with current wireless devices pertains to their operation as mobile hotspots. When a wireless device is operating as a mobile hotspot, the end-to-end connectivity over the two radio technologies (e.g., Wi-Fi and CDMA, Wi-Fi and 3GPP, etc.) bridged by the mobile hotspot may need to be monitored in order to display an indication to the user of the wireless device or manage the operation of the mobile hotspot function. Since the two radio technologies are separate, it is often cumbersome and inaccurate to monitor both radio systems simultaneously to determine whether the mobile hotspot function is idle or in use.

A need therefore exists for an improved method and system for monitoring use of a mobile hotspot function in a wireless device. Accordingly, a solution that addresses, at least in part, the above and other shortcomings is desired.

US 2010/014459 describes systems and methodologies that facilitate enhanced data service functionality for data services operating in a multi-processor computing environment.

The memo of P. Srisuresh and M. Holdrege for the internet community relates to "IP Network Address Translator (NAT) Terminology and Considerations; rfc2663.txt", IETF STANDARD, INTERNET ENGINEERING TASK FORCE, IETF, CH,1 August 1999.

The memo of K. Egevang and P. Francis for the internet community relates to the "IP Network Address Translator (NAT); rfc1631.txt",IETF STANDARD, INTERNET ENGINEERING TASK FORCE, IETF, CH, 1 May 1994.

GB 2,407,729 relates to a communications apparatus which includes a router, a network address translator and a connection controller. The connection controller governs the connection from LAN to other networks such as the Internet.

### BRIEF DESCRIPTION OF THE DRAWINGS

Features and advantages of the embodiments of the present application will become apparent from the following detailed description, taken in combination with the appended drawings, in which:

FIG. 1 is a front view illustrating a wireless device in accordance with an embodiment of the application;

FIG. 2 is a block diagram illustrating the wireless device of FIG. 1;

FIG. 3 is a block diagram illustrating a memory of the wireless device of FIG. 1;

FIG. 4 is a block diagram illustrating a wireless device operating as a mobile hotspot in accordance with an embodiment of the application;

FIG. 5 is a block diagram illustrating a network address translation table in accordance with an embodiment of the application; and,

FIG. 6 is a flow chart illustrating operations of modules within the memory of a wireless device for monitoring use of a mobile hotspot function, in accordance with an example embodiment of the application.

It will be noted that throughout the appended drawings, like features are identified by like reference numerals.

### DETAILED DESCRIPTION OF THE EMBODIMENTS

In the following description, details are set forth to provide an understanding of the application. In some instances, certain software, circuits, structures and techniques have not been described or shown in detail in order not to obscure the application. Example embodiments may be implemented in any computer programming language provided that the operating system of the device (e.g., wireless device, data processing system, etc.) provides the facilities that may support the requirements of the application. Any limitations presented would be a result of a particular type of operating system or computer programming language and would not be a limitation of the present application. Example embodiments of the present application may also be implemented in hardware or in a combination of hardware and software.

According to one example embodiment of the application, there is provided a method for monitoring use of a mobile hotspot function in a wireless device, comprising: using a processor, storing a last access time as an entry in a row for a client in a network address translation table within a memory of the wireless device, the last access time being a time when the row was last accessed by the mobile hotspot function to perform a network address translation for the client; determining whether a difference between a current time and the last access time exceeds a threshold; and, if the difference exceeds the threshold, generating an indication that the mobile hotspot function is not in use by the client.

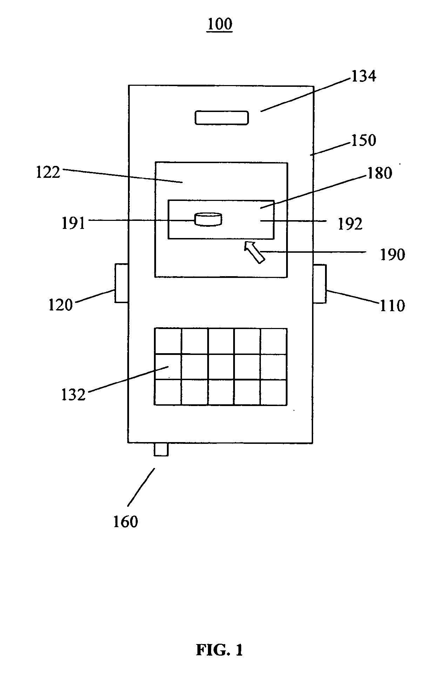

FIG. 1 is a front view illustrating a wireless device **100** in accordance with an embodiment of the application. The wireless device 100 may include a cover or case **150,** a display (e.g., a liquid crystal display ("LCD")) **122,** a graphical user interface ("GUI") **180** displayed on the display **122,** a speaker **134,** a keyboard (or keypad) **132,** a trackball or thumbwheel **110,** various select buttons **120,** and various inputs/outputs (e.g., power connector jack, data interface ports, headphones jack, etc.) **160.** Internally, the wireless device **100** may include a central processing unit ("CPU"), processor, or microprocessor **138,** memory **124, 126, 200,** a battery **156,** at least one antenna, etc., which are operatively coupled to the various inputs/outputs **160,** the keyboard **132,** the display **122,** the speaker **134,** etc., as will be described below.

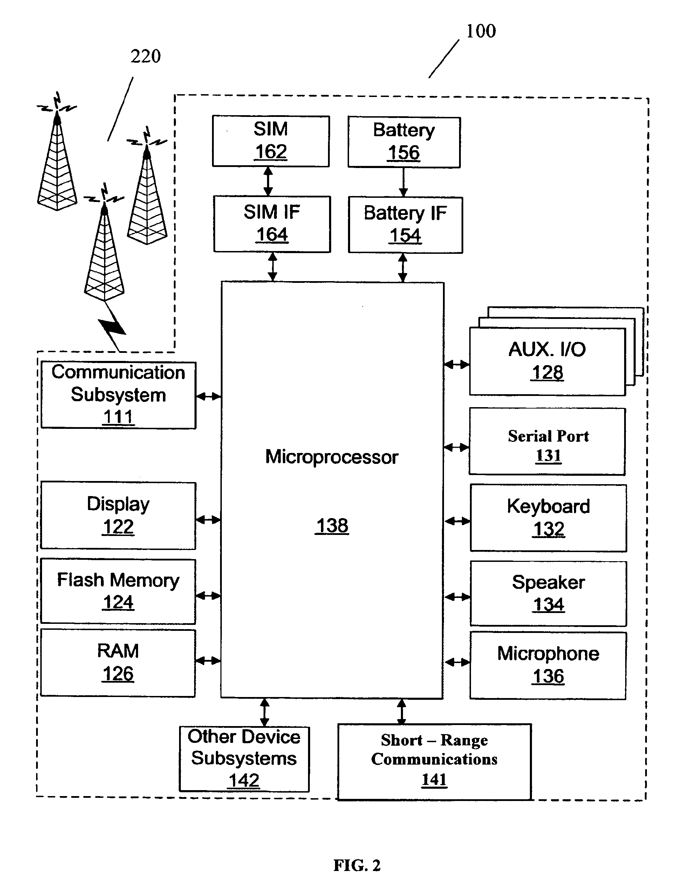

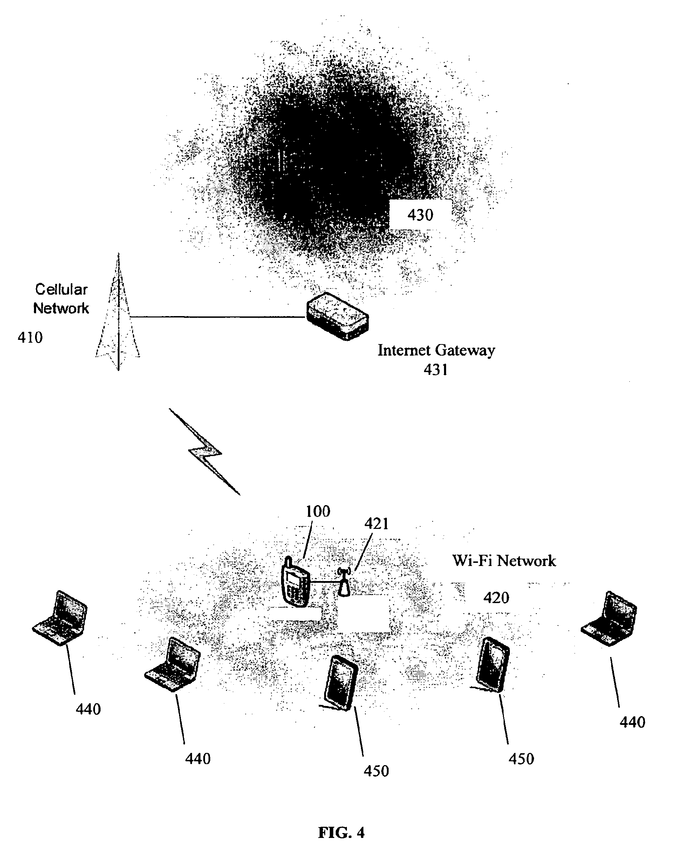

FIG. 2 is a block diagram illustrating the wireless device **100** of FIG. 1. The wireless device **100** may operate over a wireless network **220.** The wireless network **220** may include antenna, base stations, access points, transceivers, supporting radio equipment (e.g., a GSM radio, a Wi-Fi radio **421** as shown in FIG. 4, etc.), etc., as known to those of ordinary skill in the art, for supporting wireless communications between the wireless device **100** and other devices (e.g., laptop computers **440,** tablet computers **450,** etc., as shown in FIG. 4). The wireless network **220** may include a cellular network (e.g., a global system for mobile communication ("GSM") network, a 3^{rd} generation partnership project ("3GPP") GSM network, a code division multiple access ("CDMA") network, etc.) **410** and a Wi-Fi network (i.e., a WLAN based on IEEE 802.11 standards) **420** as shown in FIG. 4.

The wireless device **100** may be a two-way communication device having at least voice and advanced data communication capabilities, including the capability to communicate with other devices. Depending on the functionality provided by the device 100, it may be referred to as a data messaging device, a two-way pager, a cellular telephone with data messaging capabilities, a wireless Internet appliance, a data communication device (with or without telephony capabilities), a Wi-Fi device, a WLAN device, a dual-mode (i.e., Wi-Fi and cellular) device, a portable audio device, or a mobile hotspot device. The device 100 may communicate with any one of a plurality of transceiver stations within its geographic coverage area.

The wireless device **100** may have a communication subsystem **111,** a subscriber identity module (or "SIM" card) **162** for inserting into a SIM interface ("IF") **164** in order to operate on a cellular network (e.g., a global system for mobile communication ("GSM") network, a 3^{rd} generation partnership project ("3GPP") GSM network, etc.), a battery IF **154** for receiving one or more rechargeable batteries 156, a microprocessor **138** which controls overall operation of the device **100,** a flash memory **124** or other persistent store, a random access memory ("RAM") **126,** auxiliary input/output ("I/O") subsystems **128,** a serial port (e.g., a universal serial bus ("USB") port) **131,** a microphone **136,** a short-range communications subsystem **141,** and other device subsystems **142.** The microprocessor **138,** in addition to performing operating system functions, preferably enables execution of software applications on the device **100.**

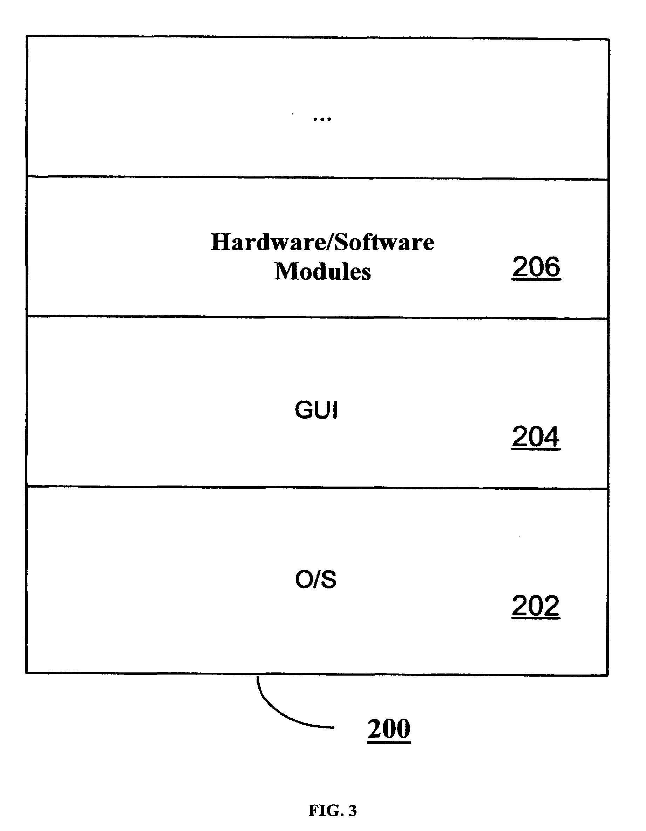

FIG. 3 is a block diagram illustrating a memory **200** of the wireless device **100** of FIG. 1. The microprocessor **138** is coupled to the memory **200.** The memory **200** has various hardware and software components for storing information (e.g., instructions, data, database tables, test parameters, etc.) for enabling operation of the device **100** and may include flash memory **124,** RAM 126, ROM (e.g., 200), disk drives (e.g., 200), etc. In general, the memory **200** may include a variety of storage devices typically arranged in a hierarchy of storage as understood to those skilled in the art. To provide a user-friendly environment to control the operation of the device **100,** operating system ("O/S") software modules **202** resident on the device **100** may provide a basic set of operations for supporting various applications typically operable through the GUI **180** and supporting GUI software modules **204.** For example, the O/S **202** provides basic input/output system features to obtain input from the auxiliary I/O **128,** the keyboard **132,** the trackball or thumbwheel **110,** and the like, and for facilitating output to the user through the display **122,** the speaker **134,** etc. According to one example embodiment, the wireless device **100** is provided with hardware and/or software modules **206** for facilitating and implementing the method of the application as will be described below. The wireless device **100** may be provided with additional hardware and/or software modules **206** for facilitating and implementing various functions (e.g., a mobile hotspot function **206** as described below).

A user may interact with the wireless device **100** and its various modules **202, 204, 206,** using the GUI **180.** GUIs are supported by common operating systems and provide a display format which enables a user to choose commands, execute application programs, manage computer files, and perform other functions by selecting pictorial representations known as icons, or items from a menu through use of an input or pointing device such as a trackball or thumbwheel **110** and keyboard **132.** The GUI **180** may include a cursor **190,** various selectable objects and icons **191,** and various windows **192.**

In general, a GUI is used to convey information to and receive commands from users and generally includes a variety of GUI objects or controls, including icons, toolbars, drop-down menus, text, dialog boxes, buttons, and the like. A user typically interacts with a GUI **180** presented on a display **122** by using an input or pointing device (e.g., trackball or thumbwheel) **110** to position a pointer or cursor **190** over an object (e.g., an icon) **191** and by "clicking" on the object **191.**

Typically, a GUI based system presents application, system status, and other information to the user in "windows" appearing on the display **122.** A window **192** is a more or less rectangular area within the display **122** in which a user may view an application or a document. Such a window **192** may be open, closed, displayed full screen, reduced to an icon, increased or reduced in size, or moved to different areas of the display **122.** Multiple windows may be displayed simultaneously, such as: windows included within other windows, windows overlapping other windows, or windows tiled within the display area.

Thus, the wireless device **100** includes computer executable programmed instructions for directing the device **100** to implement the example embodiments of the present application. The programmed instructions may be embodied in one or more hardware or software modules **206** which may be resident in the memory **200** of the wireless device **100** or elsewhere. Alternatively, the programmed instructions may be embodied on a computer readable medium or product (such as a CD disk or floppy disk) which may be used for transporting the programmed instructions to the memory **200** of the wireless device **100.** Alternatively, the programmed instructions may be embedded in a computer-readable signal or signal-bearing medium or product that may be uploaded to a network **220** by a vendor or supplier of the programmed instructions, and this signal or signal-bearing medium or product may be downloaded through an interface **111, 131, 141** to the wireless device **100** from the network **220** by end users or potential buyers.

FIG. 4 is a block diagram illustrating a wireless device 100 operating as a mobile hotspot **100** in accordance with an embodiment of the application. In general, a hotspot is a site that offers Internet access over a wireless local area network ("WLAN") through the use of a router connected to a link to the Internet. Hotspots typically use Wi-Fi technology (i.e., WLAN technology based on IEEE 802.11 standards). Referring to FIG. 4, a mobile hotspot is a device **100,** or a module or function **206** within a wireless device **100,** that is used to create a hotspot that is linked (e.g., via an Internet gateway **431)** to the Internet **430** via a cellular network (e.g., CDMA, 3GPP, etc.) **410.** The mobile hotspot is mobile in that in can be used to establish a hotspot anywhere within the service area of the cellular network **410.** Wireless devices (or clients) **440, 450** such as laptop computers, tablet computers, etc., are coupled to the mobile hotspot **100** via a WLAN such as a Wi-Fi network **420** which in turn is coupled to the Internet **430** via a cellular network **410.** As such, clients **440, 450** are able to access the Internet **430** via the mobile hotspot **100** and cellular network **410.**

As mentioned above, one problem with current wireless devices pertains to their operation as mobile hotspots. When a wireless device **100** is operating as a mobile hotspot **100,** the end-to-end connectivity over the two radio technologies (e.g., Wi-Fi and CDMA, Wi-Fi and 3GPP, etc.) bridged by the mobile hot-spot **100** may need to be monitored in order to display an indication to the user of the wireless device **100** or manage the operation of the mobile hotspot function **206.** Since the two radio technologies are separate, it is often cumbersome and inaccurate to monitor both radio systems simultaneously to determine whether the mobile hotspot function **206** is idle or in use.

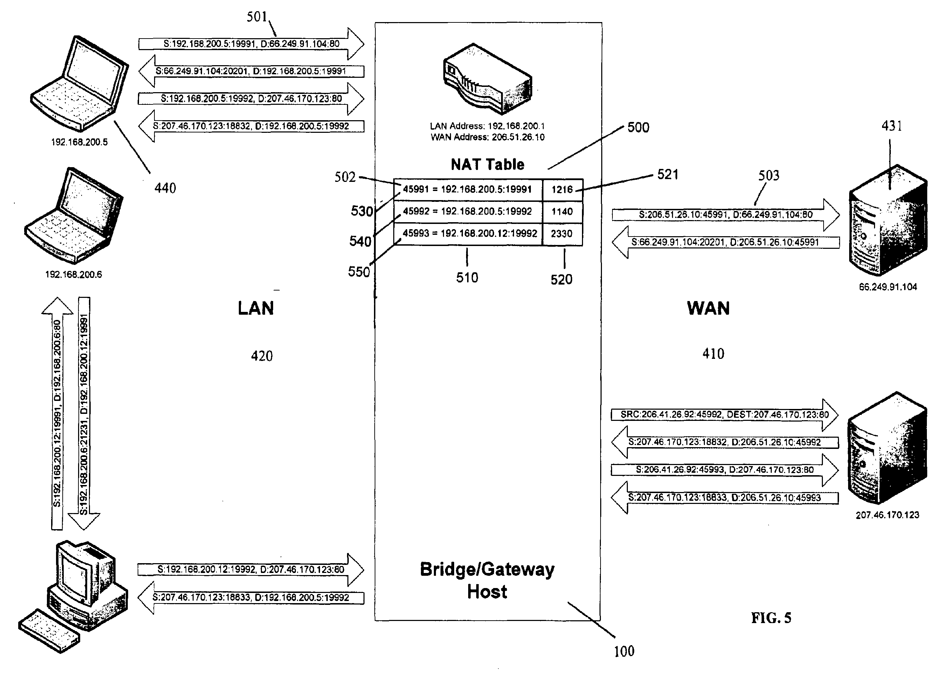

FIG. 5 is a block diagram illustrating a network address translation table **500** in accordance with an embodiment of the application. Since the Internet Protocol ("IP") address space on the Wi-Fi **420** side of the mobile hotspot **100** will be different from that on the cellular **410** side, address translation is required to map one set of addresses to the other. According to one embodiment, the wireless device **100** maintains a mapping table or network address translation ("NAT") table **500** to translate WLAN IP addresses to cellular IP addresses to support the mobile hotspot function **206.** The NAT table **500** may be stored in the memory **200** of the wireless device **100.**

In general, an IP address is a numerical label that is assigned to any device (e.g., **440, 431)** that is connected to a network (e.g., **420, 410)** that follows the Internet Protocol for communications. The Internet Protocol is used to route data packets between networks. IP addresses specify the locations of the source and destination nodes in the topology of the routing system (e.g., **100).**

For example, and referring to FIG. 5, a first device **440** on the Wi-Fi (or local area network ("LAN") ) **420** side of the mobile hotspot (or router or bridge/gateway host) **100** may have an IP address of 192.168.200.5. The first device **440** may send a data packet to a second device **431** on the cellular (or wide area network ("WAN")) **410** side of the mobile hotspot **100.** This second device **431** may have an IP address of 66.249.91.104. The mobile hotspot **100** may have a local area network ("LAN") address of 192.168.200.1 and a wide area network ("WAN") address of 206.51.26.10. First, the first device **440** sends **501** a packet having a source ("S") address of 192.168.200.5:19991 (i.e., 19991 being the source port) and a destination ("D") address of 66.249.91.104:80 (i.e., 80 being the requested destination port) to the mobile hotspot **100.** Second, the mobile hotspot **100** uses the NAT table **500** (i.e., the first row **530** in the table **500)** to map **502** the source address 192.168.200.5:19991 to port 45991 (i.e., 45991 = 192.168.200.5:19991). The mobile hotspot **100** completes the address translation by replacing the source ("S") address (i.e., 192.168.200.5) with the WAN address of the mobile hotspot **100** (i.e., 206.51.26.10). Third, the mobile hotspot **100** sends **503** the packet with the translated IP address (i.e., now having a source ("S") address of 206.51.26.10:45991 and retaining the destination ("D") address of 66.249.91.104:80) to the second device **431.**

According to one embodiment, the mobile device **100** indicates to a user of the device **100** when the mobile hotspot function **206** is being used. This indication may be presented to the user on the display **122** of the wire device **100.** The device **100** may generate the indication based upon an entry in the mapping table **500** as described below. The indication may be an icon **191** presented on the display **122.**

According to one embodiment, the mapping table **500** may be used to generate an indication of end-to-end connectivity between devices (e.g., **420, 431)** on the Wi-Fi **420** and cellular **410** sides of the mobile hotspot **100** and hence an indication that the mobile hotspot function **206** is in use. In this respect the mapping table **500** may include both a mapping column **510** and an additional column **520** in its data structure for the connection mapping. According to one embodiment, this additional column **520** may be a "last access time" column **520.** For each row (e.g., **530)** in the table **500,** if the difference between the "current time" (e.g., 1222 hours) and the "last access time" entry (e.g., "1216" hours **521** for row **530)** exceeds a predetermined "last access time threshold" (e.g., 5 minutes), then that row **530** in the table **500** can be considered elapsed, and hence the row **530** can be removed from the table **500.** No rows (e.g., **530, 540, 550)** remaining in the mapping table **500** implies that there are no end-to-end connections and hence that the mobile hotspot function **206** is not in use. Upon determination that the mobile hotspot function **206** is not in use, a signal may be generated to perform a predetermined function (e.g., changing an icon **191** presented on the display 122, disabling a feature, etc.).

According to one embodiment, the last access time threshold may be selected based on the time required to download information (e.g., a page of information) from a web site by a device or client (e.g., **440)** via the mobile hotspot function **206** of the wireless device **100.** According to another embodiment, the last access time threshold may be selected based on the last use of a service (e.g., cellular telephone service) by the wireless device **100.** In this embodiment, the last access time threshold may be a number of minutes (e.g., 2 to 5 minutes) corresponding to the last time that the wireless device **100** was used to make a cellular telephone call. In this way, the possibility that the wireless device **100** may make only one cellular connection at a time is accommodated. According to another embodiment, the last access time threshold may be set to the last use of a selected service by the wireless device **100** or client **440.**

The above embodiments may contribute to an improved method and system for monitoring use of a mobile hotspot function **206** in a wireless device **100** and may provide one or more advantages. First, an indication that the mobile hotspot function **206** is in use may be advantageous in that the use of the function **206** may be associated with a different service or cost level. Second, use of the mobile hotspot function **206** may prevent use of another function of the wireless device **100** and hence an indication that the mobile hotspot function **206** is in use may be advantageous.

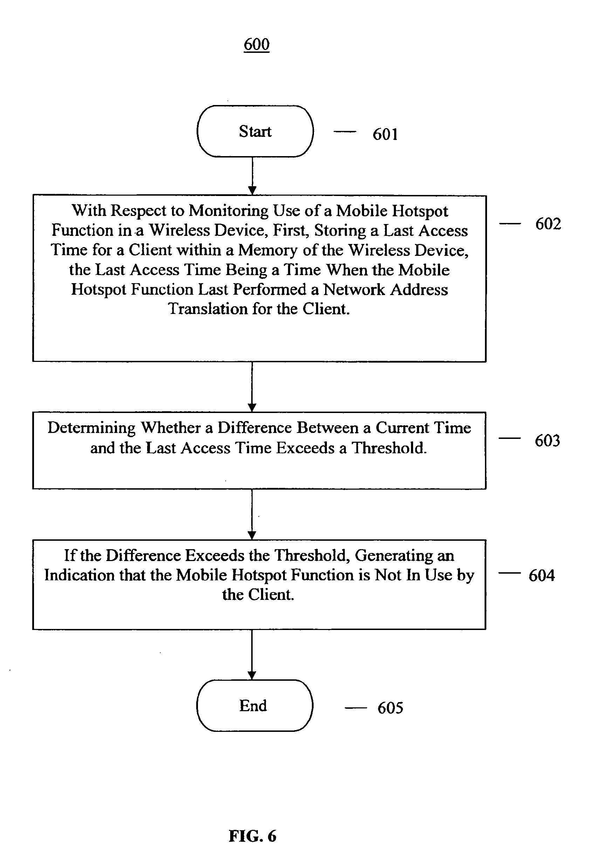

Aspects of the above described method may be illustrated with the aid of a flowchart. FIG. 6 is a flow chart illustrating operations **600** of modules **206** within the memory **200** of a wireless device **100** for monitoring use of a mobile hotspot function **206,** in accordance with an example embodiment of the application.

At step **601,** the operations **600** start.

At step **602,** a last access time (e.g., "1216" hrs) for a client (e.g., **440)** is stored within a memory **200** of the wireless device **100,** the last access time being a time when the mobile hotspot function **206** last performed a network address translation for the client **440.**

At step **603,** a determination is made as to whether a difference between a current time (e.g., 1222 hours) and the last access time (e.g., 1216 hours) exceeds a threshold (e.g., 5 minutes).

At step **604,** if the difference (e.g., 1222 hours - 1216 hours = 6 minutes) exceeds the threshold (e.g. 5 minutes), an indication (e.g., 191) that the mobile hotspot function **206** is not in use by the client **440** is generated.

At step **605,** the operations **600** end.

In the above method, the last access time (e.g., "1216" hrs) may be stored as an entry (e.g., **521)** in a row (e.g., **530)** for the client **440** in a network address translation table **500** within the memory **220** of the wireless device **100** and the last access time (e.g., "1216" hrs) may be a time when the row **530** was last accessed by the mobile hotspot function **206** to perform the network address translation for the client **440.** The method may further include presenting the indication **191** on a display **122** of the wireless device **100.** The indication may be an icon **191.** The client **440** may be coupled to the wireless device **100** by a first network **420.** The first network **420** may be a wireless local area network ("WLAN"). The WLAN **420** may be a Wi-Fi network. The wireless device **100** may be coupled by a second network **410** to a third network **430.** The second network **410** may be a cellular network and the third network **430** may be the Internet. The threshold may be a time period required to download a selection of information from a web site by the client **440** via the mobile hotspot function **206.** And, the threshold may be a time period corresponding to a last use of a selected service (e.g., cellular telephone service) by the wireless device **100** or client **440.**

The above described method is generally performed by a wireless device 100. However, according to one example embodiment, the method can be performed by any other data processing system 100 such as a personal computer ("PC"), server, laptop computer, etc.

While example embodiments of this application are primarily discussed as a method, a person of ordinary skill in the art will understand that the apparatus discussed above with reference to a wireless device 100 and a data processing system, may be programmed to enable the practice of the method of these example embodiments. Moreover, an article of manufacture or product for use with a wireless device 100 or data processing system, such as a pre-recorded storage device or other similar computer readable medium or product including program instructions recorded thereon, may direct the wireless device 100 or data processing system to facilitate the practice of the method of these example embodiments. It is understood that such apparatus, products, and articles of manufacture also come within the scope of the application.

The embodiments of the application described above are intended to be exemplary only. Those skilled in this art will understand that various modifications of detail may be made to these embodiments, all of which come within the scope of the application.

## Claims

1. A method for monitoring use of a mobile hotspot function (206) in a wireless device (100), comprising:
storing a last access time for a client (440) as an entry (521) in a row (530) for the client (440) in a network address translation table (500) within a memory (200) of the wireless device (100), the last access time being a time when the mobile hotspot function (206) last performed a network address translation for the client (440), wherein the last access time is a time when the row (530) was last accessed by the mobile hotspot function (206) to perform the network address translation for the client (440);
determining for each row (530) in the table (500) whether a difference between a current time and the last access time exceeds a threshold;
if the difference exceeds the threshold, removing the row (530) from the table (500);
if no rows (530) remain in the table (500), generating an indication (191) that the mobile hotspot function is not in use; and,
presenting the indication (191) on a display (122) of the wireless device (100).

2. The method of claim 1 wherein the indication (191) is an icon (191).

3. The method of any one of claims 1 to 2 wherein the client (440) is coupled to the wireless device (100) by a first network (420).

4. The method of claim 3 wherein the first network (420) is a wireless local area network, WLAN.

5. The method of claim 4 wherein the WLAN (420) is a Wi-Fi network.

6. The method of any one of claims 1 to 5 wherein the wireless device (100) is coupled by a second network (410) to a third network (430).

7. The method of claim 6 wherein the second network (410) is a cellular network and the third network (430) is the Internet.

8. The method of any one of claims 1 to 7 wherein the threshold is a time period required to download a selection of information from a web site by the client (440) via the mobile hotspot function (206).

9. The method of any one of claims 1 to 8 wherein the threshold is a time period corresponding to a last use of a selected service by the wireless device (100) or client (440).

10. The method of any one of claims 1 to 9 and further comprising, if the mobile hotspot function (206) is not in use, disabling a feature of the wireless device (100).

11. A system (100) for monitoring use of a mobile hotspot function (206), comprising:
a memory, a processor (138) coupled to the memory (200) and a display (122); and,
at least one of hardware and software modules (206) within the memory (200) and controllable or executable by the processor (138) for causing the system (100) to implement the method of any one of claims 1 to 10.

12. A wireless device (100) being or comprising the system (100) of claim 11.

## Patentansprüche

1. Ein Verfahren zur Überwachung einer Verwendung einer "mobiler Hotspot"-Funktion (206) in einer drahtlosen Vorrichtung (100), das aufweist:
Speichern einer letzten Zugriffszeit für einen Client (440) als einen Eintrag (521) in einer Zeile (530) für den Client (440) in einer Netzwerkadresseübersetzungstabelle (500) in einem Speicher (200) der drahtlosen Vorrichtung (100), wobei die letzte Zugriffszeit ein Zeitpunkt ist, an dem die "mobiler Hotspot"-Funktion (206) zuletzt eine Netzwerkadresseübersetzung für den Client (440) durchgeführt hat, wobei die letzte Zugriffszeit ein Zeitpunkt ist, an dem das letzte Mal durch die "mobiler Hotspot"-Funktion (206) auf die Zeile (530) zugegriffen wurde, um die Netzwerkadresseübersetzung für den Client (440) durchzuführen;
Bestimmen für jede Zeile (530) in der Tabelle (500), ob eine Differenz zwischen einer aktuellen Zeit und der letzten Zugriffszeit eine Schwelle übersteigt;
wenn die Differenz die Schwelle übersteigt, Entfernen der Zeile (530) aus der Tabelle (500);
wenn keine Zeilen (530) in der Tabelle (500) verbleiben, Erzeugen einer Anzeige (191), dass die "mobiler Hotspot"-Funktion nicht verwendet wird; und
Darstellen der Anzeige (191) auf einer Anzeige (122) der drahtlosen Vorrichtung (100).

2. Das Verfahren gemäß Anspruch 1, wobei die Anzeige (191) ein Symbol (191) ist.

3. Das Verfahren gemäß einem der Ansprüche 1 bis 2, wobei der Client (440) mit der drahtlosen Vorrichtung (100) über ein erstes Netzwerk (420) gekoppelt ist.

4. Das Verfahren gemäß Anspruch 3, wobei das erste Netzwerk (420) ein drahtloses lokales Netzwerk (WLAN - wireless local area network) ist.

5. Das Verfahren gemäß Anspruch 4, wobei das WLAN (420) ein Wi-Fi-Netzwerk ist.

6. Das Verfahren gemäß einem der Ansprüche 1 bis 5, wobei die drahtlose Vorrichtung (100) über ein zweites Netzwerk (410) mit einem dritten Netzwerk (430) gekoppelt ist.

7. Das Verfahren gemäß Anspruch 6, wobei das zweite Netzwerk (410) ein zellulares Netzwerk ist und das dritte Netzwerk (430) das Internet ist.

8. Das Verfahren gemäß einem der Ansprüche 1 bis 7, wobei die Schwelle eine Zeitdauer ist, die erforderlich ist, um eine Auswahl von Information von einer Webseite durch den Client (440) über die "mobiler Hotspot"-Funktion (206) herunterzuladen.

9. Das Verfahren gemäß einem der Ansprüche 1 bis 8, wobei die Schwelle eine Zeitdauer ist, die einer letzten Verwendung eines ausgewählten Dienstes durch die drahtlose Vorrichtung (100) oder den Client (440) entspricht.

10. Das Verfahren gemäß einem der Ansprüche 1 bis 9 und weiter aufweisend, wenn die "mobiler Hotspot"-Funktion (206) nicht verwendet wird, Deaktivieren eines Merkmals der drahtlosen Vorrichtung (100).

11. Ein System (100) zum Überwachen einer Verwendung einer "mobiler Hotspot"-Funktion (206), das aufweist:
einen Speicher, einen Prozessor (138), der mit dem Speicher (200) gekoppelt ist, und eine Anzeige (122); und
zumindest eines aus Hardware- und Software-Modulen (206) in dem Speicher (200) und steuerbar oder ausführbar durch den Prozessor (138), um das System (100) zu veranlassen, das Verfahren gemäß einem der Ansprüche 1 bis 10 zu implementieren.

12. Eine drahtlose Vorrichtung (100), die das System (100) gemäß Anspruch 11 ist oder dieses aufweist.

## Revendications

1. Procédé destiné à surveiller l'utilisation d'une fonction de point d'accès sans fil mobile (206) dans un dispositif sans fil (100), comprenant le fait :
de mémoriser un dernier temps d'accès pour un client (440) en tant qu'entrée (521) dans une rangée (530) pour le client (440) dans une table de traduction d'adresses de réseau (500) dans une mémoire (200) du dispositif sans fil (100), le dernier temps d'accès étant un moment où la fonction de point d'accès sans fil mobile (206) a exécuté pour la dernière fois une traduction d'adresses de réseau pour le client (440), dans lequel le dernier temps d'accès est le moment du dernier accès à la rangée (530) par la fonction de point d'accès sans fil mobile (206) pour effectuer la traduction d'adresses de réseau pour le client (440) ;
de déterminer pour chaque rangée (530) dans la table (500) si une différence entre un temps actuel et le dernier temps d'accès dépasse un seuil ;
d'éliminer, si la différence dépasse le seuil, la rangée (530) à partir de la table (500) ;
de générer, si aucune rangée (530) ne reste dans la table (500), une indication (191) selon laquelle la fonction de point d'accès sans fil mobile n'est pas en cours d'utilisation ; et,
de présenter l'indication (191) sur un écran (122) du dispositif sans fil (100).

2. Procédé de la revendication 1, dans lequel l'indication (191) est une icône (191).

3. Procédé de l'une quelconque des revendications 1 et 2, dans lequel le client (440) est couplé au dispositif sans fil (100) par un premier réseau (420).

4. Procédé de la revendication 3, dans lequel le premier réseau (420) est un réseau local sans fil, WLAN.

5. Procédé de la revendication 4, dans lequel le réseau WLAN (420) est un réseau Wi-Fi.

6. Procédé de l'une quelconque des revendications 1 à 5, dans lequel le dispositif sans fil (100) est couplé par un deuxième réseau (410) à un troisième réseau (430).

7. Procédé de la revendication 6, dans lequel le deuxième réseau (410) est un réseau cellulaire et le troisième réseau (430) est l'Internet.

8. Procédé de l'une quelconque des revendications 1 à 7, dans lequel le seuil est une durée nécessaire pour télécharger une sélection d'informations à partir d'un site Web par le client (440) via la fonction de point d'accès sans fil mobile (206).

9. Procédé de l'une quelconque des revendications 1 à 8, dans lequel le seuil est une durée correspondant à une dernière utilisation d'un service sélectionné par le dispositif sans fil (100) ou le client (440).

10. Procédé de l'une quelconque des revendications 1 à 9 et comprenant en outre le fait de désactiver, si la fonction de point d'accès sans fil mobile (206) n'est pas en cours d'utilisation, une fonction du dispositif sans fil (100).

11. Système (100) destiné à surveiller l'utilisation d'une fonction de point d'accès sans fil mobile (206), comprenant :
une mémoire, un processeur (138) couplé à la mémoire (200) et un écran (122) ; et,
au moins l'un des modules matériels et logiciels (206) dans la mémoire (200) et pouvant être commandé ou exécuté par le processeur (138) pour amener le système (100) à mettre en oeuvre le procédé de l'une quelconque des revendications 1 à 10.

12. Dispositif sans fil (100) étant ou comprenant le système (100) de la revendication 11.
